Europäisches Patentamt

European Patent Office

Office européen des brevets

(11) Veröffentlichungsnummer: **0 490 190 A1**

# EUROPÄISCHE PATENTANMELDUNG

(21) Anmeldenummer: **91120543.3**

(22) Anmeldetag: **29.11.91**

(51) Int. Cl.5: **A21C 3/06**

(30) Priorität: **13.12.90 DE 4039793**

(43) Veröffentlichungstag der Anmeldung:
**17.06.92 Patentblatt 92/25**

(84) Benannte Vertragsstaaten:
**DE FR GB IT NL**

(71) Anmelder: **A. FRITSCH GMBH & CO. KG**
**Bahnhofstrasse 27-31**
**W-8711 Markt Einersheim(DE)**

(72) Erfinder: **Beier, Siegbert**
**Schillerstrasse 22**
**W-8710 Kitzingen(DE)**

(74) Vertreter: **Patentanwälte Czowalla . Matschkur**
**& Partner**
**Dr.-Kurt-Schumacher-Strasse 23**
**W-8500 Nürnberg 1(DE)**

(54) **Verfahren und Vorrichtung zum Biegen von Teigstücken, insbesondere Croissants.**

(57) Vorrichtung zum maschinellen Biegen von Teigstücken, insbesondere Croissants, um einen Dorn, wobei durch zwei Biegearme, die entsprechend der gewünschten Form des Teigstückes gekrümmt und zueinander derart verschwenkbar angeordnet sind, sie dabei ein zu biegendes Teigstück um den Dorn spannen.

FIG. 1

Die Erfindung betrifft eine Vorrichtung zum Biegen von Teigstücken, insbesondere Croissants, wobei die Teigstücke maschinell um einen Dorn gebogen werden. Ferner betrifft die Erfindung ein Herstellungsverfahren für derartige Teigstücke.

Bekannt ist ein Verfahren und eine Vorrichtung zur Verformung eines Teigwickels zu einem geschlossenen Ring (DE-OS 37 43 319). Jeder Teigwickel wird auf einem Transportband mittels einer maschinell elastisch verformbaren Schale, die sich längs des gesamten Transportbandes erstreckt, kreisförmig verformt, bis sich die Wickelenden seitlich beziehungsweise radial überlappen. Allerdings bleibt dabei die konkrete Realisierung dieser ortsfesten Schale offen und dürfte einen erheblichen konstruktiven Aufwand erfordern.

Ferner ist eine Teig-Biegeanlage bekannt (IT-PS 1 045 079), bei der ein Förderband einer Biegestation längliche Teigstücke zuführt. Die Biegestation bildet einen sich in Förderrichtung zunehmend verengenden Durchgangskanal, der von angetriebenen Rollen beidseitig begrenzt ist. Indem die Drehgeschwindigkeit dieser Rollen höher als die Fördergeschwindigkeit des Förderbandes ist, werden die an den Rollen anstoßenden Teigstückenden schneller transportiert als der mittlere Teigstückabschnitt, so daß in Verbindung mit der zunehmenden Kanalverengung eine Biegung in Förderrichtung stattfindet. Ein ringförmiges Schließen oder gar Überlappen der Teigstückenden läßt sich damit jedoch nicht erreichen.

Schließlich ist eine Teigstück-Biegeanlage bekannt (EP 0 329 235 A2), bei der mittels eines Förderbandes Teigstücke nacheinander einer ersten und einer zweiten Biegestation zugeführt werden. Diese weisen an das Teigstück schwenkbare Biegerollen auf, welche das Teigstück um einen Dorn spannen. Zur Positionierung der Vielzahl der Biegerollen pro Biegestation sind allerdings konstruktiv aufwendige Hebelgestänge erforderlich. Zudem läßt sich in der zweiten Biegestation eine Überlappung der Teigstückenden nur radial nebeneinander in einer Biegeebene und nicht axial aufeinander in unterschiedlichen Ebenen durchführen.

Mithin stellt sich das der Erfindung zugrundeliegende Problem, eine Vorrichtung zum maschinellen Biegen von Teigstücken ohne die vorgenannten Nachteile zu schaffen, die sich durch einen einfachen Aufbau unter Verwendung einer Minimalzahl von Einzelkomponenten auszeichnet und flexibel an diverse Biegungsformen anpaßbar ist. Zur Lösung wird bei einer Vorrichtung zum maschinellen Biegen von Teigstücken um einen Dorn erfindungsgemäß vorgeschlagen, zwei Biegearme vorzusehen, die entsprechend der gewünschten Form des Teigstückes gekrümmt und zueinander derart verschwenkbar angeordnet sind, daß sie im Zuge ihres Verschwenkens ein zu biegendes Teigstück um den Dorn spannen.

Ein Teigstück, das im Bereich der Biegearme plaziert worden ist, wird von diesen aufgrund ihres Verschwenkens umfaßt und um den Dorn herum gekrümmt. Das Teigstück befindet sich dann eingepreßt zwischen dem Dorn und den Biegearmen, welche den Dorn umgeben. Die schwenkbar gelagerten Biegearme lassen sich leicht austauschen, so daß die erfindungsgemäße Biegestation leicht auf vielfältige Formen für Teigstücke einstellbar ist.

Vor allem bei der Herstellung von Croissants besteht vielfach die Anforderung, daß die Teigstückenden axial einander überlappen bzw. übereinanderliegen. Dem trägt eine Ausbildung der Erfindung Rechnung, nach der ein Biegearm mit einem Hubelement zum Verstellen eines der Enden des Teigstückes versehen ist, und zwar in einer Richtung abweichend von der Schwenkebene des anderen, nicht mit einem Hubelement versehenen Biegarms.

In konkreter Realisierung dieses Gedankens ist das Hubelement als das Teigstück unter- oder hintergreifender Vorsprung am Biegearm ausgeführt, der aus der Schwenkebene des anderen Biegearms - gegebenenfalls gegen die Kraft einer Rückstellfeder - hebbar ausgeführt ist. Das Heben des Biegearms läßt sich leicht durch einen pneumatischen oder hydraulischen Linearantrieb realisieren, der den Biegearm aus der Schwenkebene bewegt. Dabei ist es zweckmäßig, noch ein Andrückorgan vorzusehen, das parallel zum Dorn verschiebbar ist und dabei die bereits übereinander gelegten Teigstücke aufeinanderpreßt. Als konstruktive Realisierung für ein derartiges Andruckorgan eignet sich ein linear verstellbarer Druckstempel mit Führung parallel zum Dorn.

Beim Spannen eines Teigstückes um den Dorn kann es vorkommen, daß dieses später am Dorn haften bleibt. Dem trägt eine besondere Ausbildung der Erfindung Rechnung, wonach eine Abstreifeinrichtung für Teigstücke vorgesehen ist, die längs des Dornes verschiebbar ist. Zweckmäßig ist die Abstreifeinrichtung als U-förmiger und den Dorn umgebender, vorzugsweise flacher Körper ausgebildet, also etwa die Form eines Hufeisens aufweist. Bei Vorhandensein des genannten Andrückorgans lassen sich dessen Linarbewegungen vorteilhaft zur Erzeugung der Abstreifbewegungen für den U-Körper nützen, indem der U-Körper und das Andrückorgan miteinander gekoppelt und/oder ortsfest aneinander befestigt sind.

Um den Dorn - gegebenenfalls zusammen mit dem Andrückorgan und/oder der Abstreifeinrichtung - in den Einzugsbereich der Biegearme zu bringen bzw. ihn von letzteren zu entfernen, ist in Weiterbildung der Erfindung ein erster Linearantrieb vorgesehen, der von einem Teigstück-Erfassungssensor, z. B. einer Lichtschranke, und/oder einem Zeitglied angesteuert wird. Die Zeitkonstante des Zeitglieds ist dabei entsprechend der Dauer des Biegevorgangs durch die Biegearme eingestellt.

Zur Betätigung des Andrückorgans und/oder der Abstreifeinrichtung jeweils längs des Dornes ist es zweckmäßig, einen zweiten Linearantrieb vorzusehen, der die genannten komponenten in zwei Stufen verstellt: die erste Stufe dient dazu, das Andrückorgan in Angriff an die Teigstücke zu bringen; die zweite Stufe ermöglicht das vollständige Abstreifen eines etwaigen haftenden Teigstücks vom Dorn.

Ferner liegt es im Rahmen der Erfindung, bei der obengenannten hebbaren Ausführung eines Biegearmes einen dritten Linearantrieb anzuordnen, der dem hebbaren Biegearm eine aus der Schwenkebene des anderen Biegearms führende Hubbewegung erteilt. Optional ist ein vierter Linearantrieb dem genannten Ausstoßzylinder zu dessen Bewegung zwischen die Biegearm-Schwenkachsen hindurch zugeordnet; alternativ kann hierfür auch der genannte erste Linearantrieb verwendet werden. Das Zu- und Wegschwenken der Biegearme läßt sich zweckmäßig durch einen separaten Drehantrieb besorgen.

Mit Vorteil sind der erste, zweite, dritte und/oder vierte Linearantrieb und/oder der Drehantrieb mit einer Zeitgliedsteuerung verbunden, die vom Teigstück-Erfassungssensor angestoßen wird und einstellbare Zeitkonstanten aufweist, die der Dauer des Biege-, Andrück-, Ausstoß- und/oder Abstreifvorganges entsprechend. Diese Zeitdauern sind vorab ermittelbar und können als konstante in die Zeitgliedsteuerung eingegeben werden, so daß ein aufeinander abgestimmter Ablauf des Positionierens des Dorns, der Betätigung von den Biegearmen und des Andruckorgans sowie der Abstreifeinrichtung gewährleistet ist.

Nach einer anderen vorteilhaften Weiterbildung der Erfindung ist ein Synchronisationsgetriebe vorgesehen, über das die Biegearme in ihren Schwenkbewegungen gekoppelt sind. Hierdurch läßt sich erreichen, daß beide Biegearme gleichmäßig und symmetrisch das Teigstück um den Dorn als Krümmungszentrum herum spannen.

Bei dem eingangs abgehandelten Stand der Technik wird ein Überlappen der Teigstückenden jeweils nur dergestalt erzielt, daß die gebogenen Abschnitte des Teigstückes nicht von einer gemeinsamen radialen Biegeebene abweichen. Demgegenüber wird erfindungsgemäß ein Herstellungsverfahren für gebogene Teigstücke, insbesondere Croissants, vorgeschlagen, bei dem die Teigstücke maschinell um einen Dorn gebogen werden, währenddessen die Enden des Teigstücks in unterschiedlichen, zueinander axial versetzten Biegeebenen bewegt, übereinandergelegt und dann gegebenenfalls aufeinander gedrückt werden. Dieser Bewegungsablauf läßt sich mit oben erläuterten, besonders ausgeführten Vorrichtunen gemäß der Erfindung durchführen.

Weitere Merkmale, Vorteile und Einzelheiten im Rahmen der Erfindung ergeben sich aus der nachfolgenden Beschreibung eines bevorzugten Ausführungsbeispiels der Erfindung sowie anhand der Zeichnung. Darin zeigen:

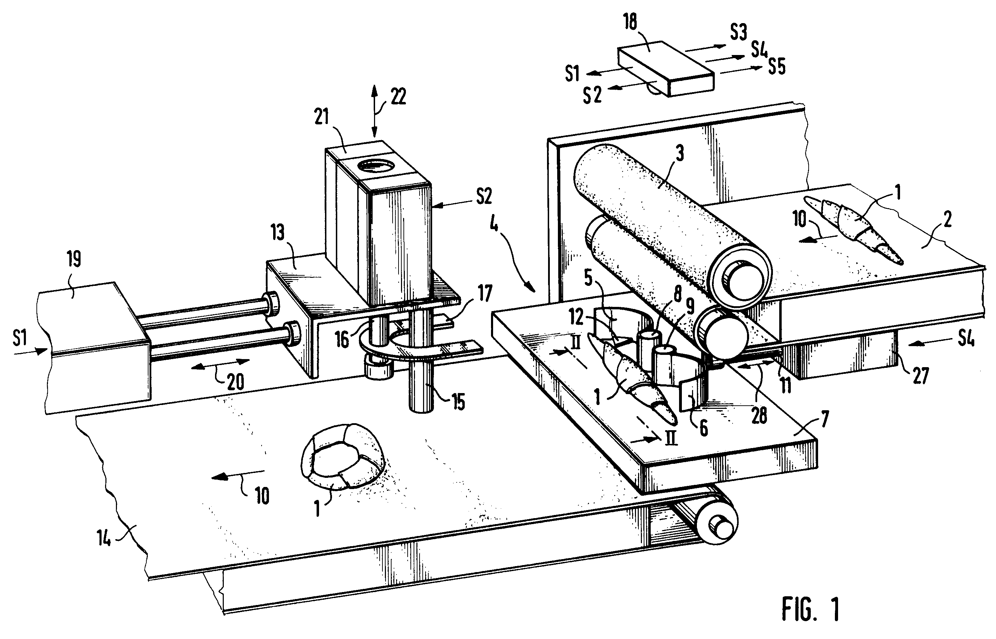

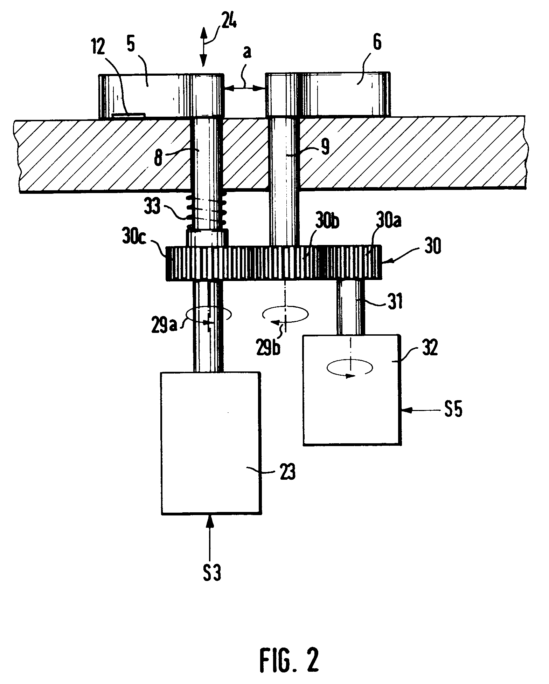

Fig. 1
eine perspektivische Ansicht der beispielhaften Teigstück-Biegevorrichtung,
Fig. 2
einen Schnitt gemäß der Linie II-II in Fig. 1, und
Fig. 3A bis 3E
in Draufsicht auf die Biegestation jeweils einen Verfahrensschritt, durchgeführt unter Verwendung der Vorrichtung gemäß Fig. 1 und 2.

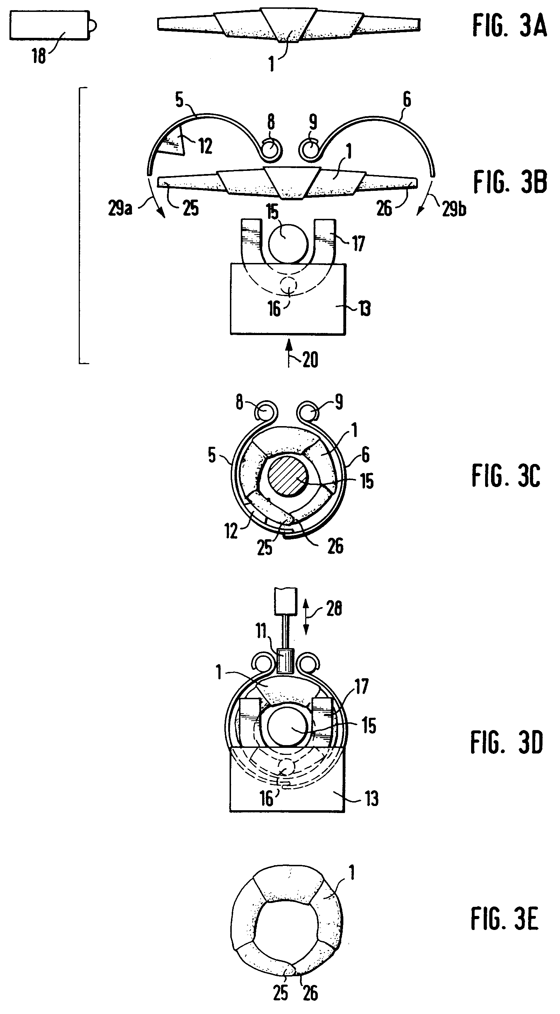

Gemäß Fig. 1 werden längliche Teigstücke 1 auf einem Förderband 2 durch einen von einer Rolle 3 begrenzten Spalt in eine Biegestation 4 befördert. Diese weist unter anderem zwei Biegearme 5, 6 auf, die auf einer Tragplatte 7 um jeweilige Scharnierachsen 8, 9 schwenkbar angelenkt sind. Das in Förderrichtung 10 beförderte Teigstück 1 gelangt durch den Spalt unterhalb der Rolle bzw. Walze 3 hindurch und fällt vor die Biegearme 5, 6. Diese sind jeweils mit einer etwa einem Kreisabschnitt ähnlichen Krümmung versehen (vgl. Fig. 3B), um den Teigstücken eine kreisringförmige Kontur (vgl. Fig. 3E) zu geben. Die beiden Scharnierachsen 8, 9 sind im Abstand a (vgl. Fig. 2) angeordnet, so daß zwischen diesen ein Ausstoßzylinder 11 hindurchgeführt werden kann. Einer der beiden Biegearme 5, 6, nach Fig. 1 der in Förderrichtung 10 gesehen rechte Biegearm 5, ist mit einem Hebevorsprung 12 versehen, der an der Innenseite des Biegearms 5 angebracht ist und dort radial nach innen vorspringt. Den Biegearmen 5, 6 gegenüberliegend ist ein L-förmiges Trägerteil 13 angeordnet, das an seiner einem zweiten Förderband 14 zugewandten Unterseite einen ortsfest fixierten Dorn 15 trägt. Daneben durchsetzt ein Druckstempel 16, der linear beweglich und parallel zur Längserstreckung des Dorns 15 geführt ist, den längeren L-Schenkel des Trägerteiles 13. An ihm ist ein starres flaches U-Profil 17 befestigt, das den Dorn 15 umgibt. Das zweite Förderband 14 ist gegenüber der Tragplatte 7 für die Biegearme 5, 6 nach unten versetzt bzw. abgestuft angeordnet, so daß der Ausstoßzylinder 11 ein fertig gebogenes Teigstück 1 von der Tragplatte 7 auf das Förderband 14 stoßen kann. Dort wird es in die selbe Förderrichtung 10 wie die des ersten Förderbandes 2 zu etwaigen weiteren Verarbeitungsstationen befördert.

Sobald auf dem ersten Förderband 2 ein Teigstück 1 den Spalt unterhalb der Rolle 3 passiert, wird es von einer Lichtschranke 18 mit darin integrierter Zeitablaufsteuerung abgetastet bzw. erfaßt. Daraufhin erzeugt die Zeitablaufsteuerung entsprechend der Reihenfolge und den Zeitdauern des Biegevorganges durch die Biegearme 5, 6, des Andrückvorganges durch den Druckstempel 16, des Auswurfvorganges durch den Ausstoßzylinder 11 und des Abstreifvorganges durch das U-Profil 17 eine Mehrzahl von einzelnen Steuersignalen S1, S2, S3, S4 bzw. S5. Das Steuersignal S1 ist einem ersten einstufigen Linearantrieb 19 zugeführt, der bei Ansteuerung dem Trägerteil 13 eine Linearbewegung 20 parallel zur Förderrichtung 10 erteilt, so daß der Dorn 15, der Druckstempel 16 und das U-Profil 17 in bzw. aus dem Einzugsbereich der Biegearme 5, 6 verschoben werden. Das zweite Steuersignal S2 dient der Ansteuerung eines zweiten zweistufigen Linearantriebs 21, der durch das L-förmige Tragteil 13 hindurch dem Druckstempel 16 mit U-Abstreifprofil 17 eine Linearbewegung 22 erteilt, die quer zur Förderrichtung 10 gerichtet ist. Die erste Stufe der Linearbewegung 22 dient der Positionierung des Druckstempels 16 auf den Teigstückenden (vgl. Fig. 3D), wenn sich das Teigstück 1 noch auf der Tragplatte 7 befindet. Die zweite gleichgerichtete Bewegungsstufe dient dem Entlangbewegen des U-Abstreifprofils 17 längs des Dornes 15, nachdem dieser vom ersten Linearantrieb 19 in eine von den Biegearmen 5, 6 entfernte Position, wie in Fig. 1 gezeigt, gebracht ist. Das dritte Steuersignal S3 dient der Ansteuerung eines dritten einstufigen Linearantriebs 23 (vgl. Fig. 2), der dem Biegearm 5 mit dem Hebevorsprung 12 während des Biegevorgangs (vgl. Fig. 3B - 3D) eine Hubbewegung 24 erteilt, um die beiden Enden 25, 26 des Teigstücks 1 in einander axial bzw. vertikal überlappender Form (senkrecht zur Zeichenebene gemäß Fig. 3E) anzuordnen. Das vierte Steuerungsignal S4 dient der Ansteuerung eines vierten Linearantriebs 27, der dem Ausstoßzylinder 11 eine Linearbewegung 28 parallel zur Förderrichtung 10 erteilt und ihn dabei durch den von den beiden Scharnierachsen 8, 9 begrenzten Durchgang zum (bereits gebogenen) Teigstück 1 führt und dann von diesem wieder zurückzieht.

Wie aus Fig. 2 ersichtlich, sind die jeweiligen Schwenkbewegungen 29a, 29b der beiden Biegearme 5, 6 über ein Zahnradgetriebe 30 bestehend aus drei Zahnrädern 30a, 30b, 30c derart synchronisiert und gekoppelt, daß sie zueinander gegensinnig symmetrisch erfolgen. Ein in der Getriebeanordnung 30 außenliegendes Zahnrad 30a ist über eine Antriebswelle an einen Drehantrieb 32 angekuppelt. Dieser wird von dem weiteren Steuersignal S5 aus dem Lichtschranken- und Steuerungsmodul 18 dann angesteuert, wenn der Dorn 15 vom ersten Linearantrieb 19 in den Bereich der Biegearme 5, 6 gebracht ist.

Nachfolgend wird anhand der Fig. 3A - 3E die Wirkungsweise der gezeigten Vorrichtung bzw. das damit durchführbare Verfahren erläutert.

Gemäß Fig. 3A sensiert die Lichtschranke 18 ein Teigstück 1 auf dem ersten Förderband 2, woraufhin nach Ablauf einer dem Herunterfallen des Teigstücks 1 vor die Biegearme 5, 6 entsprechenden Totzeit zunächst der Linearantrieb 19 und dann der Drehantrieb 32 angesteuert werden. Dabei positioniert der Linearantrieb 19 den Dorn 15 nebst Druckstemmpel 16 und Abstreifprofil 17 in den Bereich der Biegearme 5, 6; dann werden die Biegearme 5, 6 entsprechend den Schwenkbewegungen 29a, 29b aufeinander zugeschwenkt (Fig. 3B). Gleichzeitig mit der Schwenkbewegung 29a wird der dritte Linearantrieb 23 angesteuert, woraufhin dem einen Biegearm 5 mit dem Hebevorsprung 12 eine vertikale Hubbewegung 24 - gegen die Kraft einer Rückstellfeder 33 (vgl. Fig. 2) - erteilt wird. Das Resultat ist aus Fig. 3C ersichtlich, wonach das eine Teigstückende 25 vom Hebevorsprung 12 untergriffen, hochgehoben und axial über das andere Teigstückende 26 - dieses teilweise überlappend angeordnet ist. Gemäß Fig. 3D wird dann über den zweiten Linearantrieb 21 der Druckstempel 16 in Anlage auf das obenliegende Teigstückende 25 gebracht, wobei es auf das darunterliegende Teigstückende 26 gedrückt wird. Diese Stellung des Druckstempels 16 entspricht der ersten Stufe des zweistufigen Linearantriebs 21.

Nachdem das Trägerteil 13 mit den Komponenten 15, 16, 17 vom ersten Linearantrieb 19 von den Biegearmen wieder entfernt ist, erfolgt eine Ansteuerung des vierten Linearantriebs 27, wodurch der Ausstoßzylinder 11 zwischen den beiden Scharnierachsen 8, 9 hindurchbewegt wird. Dadurch ist sichergestellt, daß keine Teigstücke oder -reste auf der Trägerplatte 7 liegen und haften bleiben. Normalerweise fällt von dem von den Biegearmen 5, 6 zurückgezogenen Dorn 15 das fertiggebogene Teigstück aufgrund seines Eigengewichts auf das zweite Förderband 14. Um jedoch auch dies noch sicherzustellen, wird der zweite Linearantrieb 21 zur Ausführung seiner zweiten Bewegungsstufe in Richtung zum zweiten Förderband 14 angesteuert, wobei das Abstreifprofil 17 ein möglicherweise doch noch am Dorn 15 haftendes (gebogenes) Teigstück auf das zweite Förderband wirft.

Das mit dem erfindungsgemäßen Verfahren und der erfindunggemäßen Vorrichtung erzeugte gebogene Teigstück 1, wie es auf dem zweiten Förderband 14 weiterbefördert wird, ist in Fig. 3E dargestellt.

## Patentansprüche

1.   Vorrichtung zum maschinellen Biegen von Teigstücken (1), insbesondere Croissants, um einen Dorn (15), gekennzeichnet durch zwei Biegearme (5, 6), die entsprechend der gewünschten Form des Teigstückes gekrümmt und zueinander derart verschwenkbar (8, 29a; 9, 29b) angeordnet sind, daß sie dabei ein zu biegendes Teigstück (1) um den Dorn (15) spannen.

2. Vorrichtung nach Anspruch 1, dadurch gekennzeichnet, daß ein Biegearm (5) mit einem Hubelement zum Verstellen eines Endes (25) des Teigstückes (1) abweichend von der Schwenkebene (29b) des anderen Biegearms (6) versehen ist.

3. Vorrichtung nach Anspruch 2, dadurch gekennzeichnet, daß das Hubelement als das Teigstück unter- oder hintergreifender Vorsprung (12) am Biegearm (5) ausgeführt ist, der aus der Schwenkebene des anderen Biegearms (6) - gegebenenfalls gegen Federkraft (33) - hebbar (24) ausgeführt ist.

4. Vorrichtung nach Anspruch 2 oder 3, gekennzeichnet durch ein parallel zum Dorn (15) verschiebbares Andrückorgan, um die beiden gegebenenfalls übereinanderliegenden Teigstückenden (25, 26) aneinanderzupressen (22).

5. Vorrichtung nach Anspruch 4, dadurch gekennzeichnet, daß das Andrückorgan als linear verstellbarer (22) Druckstempel (16) ausgeführt ist.

6. Vorrichtung nach einem der vorangehenden Ansprüche, gekennzeichnet durch eine längs des Dornes (15) verschiebbare Abstreifeinrichtung für am Dorn (15) haftende Teigstücke (1).

7. Vorrichtung nach Anspruch 6, dadurch gekennzeichnet, daß die Abstreifeinrichtung als U-förmiger und den Dorn (15) umgebender Körper (17) ausgebildet ist, der vorzugsweise mit den Bewegungen (22) eines etwaigen Andrückorgans, insbesondere Druckstempels (16), gekoppelt ist.

8. Vorrichtung nach einem der vorangehenden Ansprüche, dadurch gekennzeichnet, daß der Dorn (15) gegebenenfalls mit dem Andrückorgan und/oder der Abstreifeinrichtung zu seiner zeitweisen Positionierung (20) im Bereich der Biegearme (5, 6) mit einem ersten Linearantrieb (19) gekoppelt ist, der zu seiner Ansteuerung mit einem Teigstück-Erfassungssensor, zum Beispiel einer Lichtschranke (18), und/oder mit einem Zeitglied verbunden ist.

9. Vorrichtung nach einem der Ansprüche 4 - 8, gekennzeichnet durch einen zweiten, zumindest zweistufigen Linearantrieb (21) zum Verschieben (22) des Andrückorgans und/oder der Abstreifeinrichtung längs des Dorns (15).

10. Vorrichtung nach einem der vorangehenden Ansprüche jeweils mit Anspruch 3 , gekennzeichnet durch einen dritten Linearantrieb (23) zur Erzeugung einer Hubbewegung (24) für den Biegearm (5) mit dem Hubvorsprung (12).

11. Vorrichtung nach einem der vorangehenden Ansprüche, gekennzeichnet durch im Abstand (a) voneinander angeordnete Biegearm-Schwenkachsen (8, 9), zwischen welchen hindurch bewegbar (28) ein Ausstoßorgan, zum Beispiel Ausstoßzylinder (11), angeordnet ist, das mit einem vierten oder gegebenenfalls dem ersten Linearantrieb (27, 19) gekoppelt und/oder synchronisiert ist.

12. Vorrichtung nach Anspruch 8, 9, 10 oder 11, dadurch gekennzeichnet, daß der erste, zweite, dritte und/oder vierte Linearantrieb (19, 21, 23, 27) und/oder eine Drehantriebseinrichtung (32) für die Biegearme (5, 6) mit einer vom Teigstück-Erfassungssensor angestoßenen Zeitgliedsteuerung verbunden sind, deren Zeitkonstanten der Dauer des Biege-, Andrück-, Ausstoß- und/oder Abstreifvorganges entsprechen.

13. Vorrichtung nach einem der vorangehenden Ansprüche, dadurch gekennzeichnet, daß die Biegearme (5, 6) in ihren Schwenkbewegungen (29a, 29b) über ein Synchronisationsgetriebe (30) miteinander gekoppelt sind.

14. Herstellungsverfahren für gebogene Teigstükke, insbesondere Croissants, vorzugsweise unter Verwendung einer Vorrichtung nach einem der vorangehenden Ansprüche, wobei die Teigstücke (1) maschinell um einen Dorn (15) gebogen werden, dadurch gekennzeichnet, daß während des Biegevorganges die Enden (25, 26) des Teigstückes in unterschiedliche Biegeebenen (29a, 29b) versetzt (24), übereinander gelegt (Fig. 3C) und dann gegebenenfalls aufeinander (22) gedrückt werden.

FIG. 1

EP 0 490 190 A1

FIG. 2

FIG. 3A

FIG. 3B

FIG. 3C

FIG. 3D

FIG. 3E

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 582 472 (D.R. HANSON)<br>* das ganze Dokument *<br>--- | 1 | A21C3/06 |
| A | FR-A-2 558 339 (C.M.P. JOUAS)<br><br>----- | | |
| | | | **RECHERCHIERTE SACHGEBIETE (Int. Cl.5)**<br><br>A21C |

Der vorliegende Recherchenbericht wurde für alle Patentansprüche erstellt

| Recherchenort | Abschlußdatum der Recherche | Prüfer |
|---|---|---|
| DEN HAAG | 02 MAERZ 1992 | FRANKS N.M. |